# EUROPÄISCHE PATENTANMELDUNG

(11) **EP 4 541 565 A1**
(43) Veröffentlichungstag der Anmeldung: **23.04.2025**
(21) Anmeldenummer: 24207013.4
(22) Anmeldetag: 16.10.2024
(51) Int. Cl.: B29C 70/30, B29C 70/54, B29C 33/02, B29C 33/38

(54) **FORMWERKZEUG UND VERFAHREN ZUR HERSTELLUNG VON FASERVERBUNDWERKSTOFFKOMPONENTEN**

(30) Priorität: 17.10.2023 DE 102023128415
(71) Anmelder: Deutsches Zentrum für Luft- und Raumfahrt e. V., 53227 Bonn-Oberkassel (DE); richter & heß VERPACKUNGS-SERVICE GmbH, 09120 Chemnitz (DE)
(72) Erfinder: Prussak, Robert, 53227 Bonn-Oberkassel (DE); Sämann, Philipp, 53227 Bonn-Oberkassel (DE); Junker, Stefan, 53227 Bonn-Oberkassel (DE); Bäns, Constantin, 53227 Bonn-Oberkassel (DE); Andres, Marcel, 53227 Bonn-Oberkassel (DE); Graf, Johannes, 09120 Chemnitz (DE)
(74) Vertreter: Gerstein, Hans Joachim

(57) **Zusammenfassung**

Ein Formwerkzeug (14) zur Herstellung von Faserverbundwerkstoffkomponenten mit einem Rahmen (17) und/oder einem aus mindestens einem Seitenhalteelement (4) gebildeten Halterahmen und mit einem Formeinsatz (9), der eine formgebende Kontur (10) aufweist, wird beschrieben. Der Formeinsatz (9) ist aus aneinander geschichteten Lagen von plattenförmigen Stützelementen (8) gebildet. Der Formeinsatz (9) ist mit einer Formschicht (15) abdeckbar und der Faserverbundwerkstoff auf der Formschicht (15) auflegbar und die aus dem Faserverbundwerkstoff gebildete Faserverbundwerkstoffkomponente mit der formgebenden Kontur (10) des Formeinsatzes (9) abformbar.

## Beschreibung

Die Erfindung betritt ein Formwerkzeug zur Herstellung von Faserverbundwerkstoffkomponenten mit einem Rahmen und/oder einem aus mindestens einem Seitenhalteelement gebildeten Halterahmen und mit einem Formeinsatz, der eine formgebende Kontur aufweist.

Die Erfindung betrifft weiterhin ein Verfahren zur Herstellung von Faserverbundwerkstoffkomponenten mit einem solchen Formwerkzeug.

Für die Fertigung von Strukturen und Elementen aus Faserverbundwerkstoffen (FVW) werden formgebende Werkzeuge, sogenannte Formwerkzeuge benötigt. Je nach Anwendung, Losgröße, Budget, Langlebigkeit und Fertigungsrahmenbedingungen werden unterschiedliche Materialien für die Herstellung der Formwerkzeuge benötigt, die häufig einen signifikanten Teil zu den Gesamtkosten beitragen. Typische Materialien, aus denen Formwerkzeuge hergestellt werden sind Stahl, Aluminium, Epoxid, Glasfaserverstärkter Kunststoff (GFK), Verbundwerkstoffverstärktes Metall, Werkzeugplatten, CNC-bearbeitete Metalle und Kunststoffe sowie Silikonkautschuk.

Stahl ist ein für die Herstellung von Formwerkzeugen am häufigsten verwendeter Werkstoff, da er langlebig und zäh ist und hohen Temperaturen und Druck standhält. Er eignet sich für die Großserienproduktion und wird häufig in Branchen wie der Luft- und Raumfahrt und der Automobilindustrie verwendet.

Aluminium ist ein leichter Werkstoff, der eine gute Wärmeleitfähigkeit bietet, was eine schnellere Aushärtung von Verbundwerkstoffen ermöglicht. Aluminiumformen werden in verschiedenen Branchen eingesetzt, insbesondere für kleinere und mittelgroße Bauteile.

Epoxid ist ein kostengünstiger Werkstoff für Epoxidformen, die für kleine bis mittlere Produktionsmengen geeignet sind. Sie werden häufig für die Herstellung von Prototypen und Kleinserien verwendet. Epoxidformwerkzeuge können bei Bedarf mit Glas- oder Kohlenstofffasern verstärkt werden.

Glasfaserverstärkter Kunststoff (GFK) ermöglicht die einfache Herstellung von leichten GFK-Formen und kann für bestimmte Anwendungen kostengünstig sein. GFK-Formwerkzeuge werden in der Regel für kleine bis mittelgroße Komponenten verwendet.

Verbundwerkstoffverstärktes Metall kombiniert herkömmliche Materialien wie Stahl oder Aluminium mit Verbundwerkstoffen wie Kohlefaser oder Glasfaser. Diese Hybridformen bieten ein ausgewogenes Verhältnis zwischen Festigkeit, thermischen Eigenschaften und Kosteneffizienz.

Werkzeugplatten, die auch "Tooling Boards" genannt und z. B. unter den Marken RenShape^{®}, RAKU^{®} etc. vertrieben werden, sind maschinell bearbeitbare Materialien mit hoher Dichte, die zur Herstellung von Formen mit komplizierten Formen verwendet werden. Sie werden häufig für das Prototyping und die Kleinserienproduktion verwendet.

CNC-bearbeitete Metalle und Kunststoffe sind für das Rapid Prototyping und kleinere Produktionsserien geeignet. Damit können Formen aus verschiedenen Metallen (z. B. Aluminium, Stahl) oder Kunststoffen (z. B. ABS, PEEK) mittels CNC-Bearbeitung hergestellt werden.

Silikonkautschuk wird für die Herstellung flexibler Formen für komplizierte Formen und Muster verwendet. Formwerkzeuge aus Silikonkautschuk werden häufig in Branchen wie Kunst und Handwerk, Rapid Prototyping und Spezialeffekte eingesetzt.

Die herkömmlichen Formwerkzeuge erfordern einen relativ hohen Einsatz von Ressourcen und sind mit relativ hohen Herstellungs- und Anschaffungskosten verbunden, die sich insbesondere bei wenigen Abformungen wie beispielsweise für Klein-Serien oder Prototypen nachteilig auf die Stückkosten niederschlagen. Zudem ist eine nachträgliche Anpassung der monolithischen Formwerkzeuge nicht möglich.

Trotz vorheriger Simulation des Herstellungsprozesses einschließlich der Faserablage und des Aushärteprozesses im Vorfeld mit dem Ziel, unerwünschte Abweichungen zu antizipieren und die Form im Vorfeld anpassen zu können, kommt es in der Praxis immer wieder zu unerwünschten und zum Teil unvorhersehbaren Abweichungen, die eine Nacharbeit oder den Ausschuss des Werkzeugs oder Bauteils zur Folge haben. Ein kompletter Austausch des Werkzeugs ist wirtschaftlich nicht vertretbar. In der Praxis werden daher nicht selten unausgereifte Formwerkzeuge eingesetzt, was zu einem hohen Nacharbeits- oder Ausschussanteil führt und die Ressourceneffizienz deutlich reduziert.

Aktuell werden zumeist Formwerkzeuge auf Basis von Metallen oder Kunststoffen eingesetzt. Bei der Herstellung solcher monolithischen Werkzeuge werden große Mengen an CO2 freigesetzt. Zusätzlich werden die Werkzeuge auf Basis nicht nachwachsender Rohstoffe hergestellt. Die geringe Nachhaltigkeit ist damit ein Problem.

Die aktuell meist verwendeten metallischen Werkzeuge oder Werkzeuge mit metallischen Unterkonstruktionen besitzen oft ein sehr hohes Gewicht. Dies erschwert zum einen das Handling beim Transport oder der Einlagerung und führt darüber hinaus durch die hohe thermische Masse zu einem erhöhten Ressourceneinsatz im Herstellungsprozess, da das Formwerkzeug bei der Herstellung von Faserverbundwerkstoffkomponenten häufig beheizt werden muss.

Ausgehend hiervon ist es Aufgabe der vorliegenden Erfindung, ein verbessertes Formwerkzeug und ein Verfahren zur Herstellung von Faserverbundwerkstoffkomponenten mit einem solchen Formwerkzeug zu schaffen.

Die Aufgabe wird mit dem Formwerkzeug mit den Merkmalen des Anspruchs 1 und durch das Verfahren mit den Merkmalen des Anspruchs 16 gelöst. Vorteilhafte Ausführungsformen sind in den Unteransprüchen beschrieben.

Es wird vorgeschlagen, dass der Formeinsatz aus aneinander geschichteten Lagen von plattenförmigen Stützelementen gebildet ist, wobei der Formeinsatz mit einer Formschicht abdeckbar und ein Fasergelege auf der Formschicht auflegbar und die mit dem Fasergelege gebildete Faserverbundwerkstoffkomponente mit der eingeprägten formgebende (d. h. formbildende) Kontur des Formeinsatzes abformbar ist.

Damit wird ein formvariables Formwerkzeug für die Herstellung von Faserverbundwerkstoffen auf Basis von plattenförmigen (d. h. zweidimensionalen) Stützelementen geschaffen. Die formgebende Struktur bilden dünne Stützelemente (auch Formelemente genannt) und die vertikal in einen Rahmen und/oder Halterahmen eingesteckt werden können. Auf diese Weise können dreidimensionale Formflächen über die Stirnseitenkanten der zweidimensionalen Elemente abgebildet werden. Unter plattenförmigen Stützelementen werden auch sehr dünne blattförmige Elemente verstanden.

Die Abformung der Faserverbundbauteile erfolgt auf der im Werkzeug erzeugten Formschicht, mit der die formgebende Kontur der geschichteten Stützelemente abgedeckt wird.

Die Stützelemente sind bevorzugt aus einem faserhaltigen Naturwerkstoff, bevorzugt aus Sperrholz, Pappe, Karton oder Papier, gebildet. Auch der Rahmen kann aus übereinander geschichteten Lagen von Rahmenelementen aus einem faserhaltigen Naturwerkstoff, bevorzugt aus Sperrholz, Pappe, Karton oder Papier, gebildet sein. Die Rahmenelemente können beispielsweise aus Vollpappe oder aus Wellpappe bestehen.

Das Formwerkzeug kann bevorzugt mit einer luftdichten Hülle ausgeführt werden, durch die das Einbringen und Anpressen einer Formschicht beispielsweise über ein aufgebrachtes Vakuum und über luftdurchlässige Stützelemente im Formwerkzeug ermöglicht wird.

Das Formwerkzeug ist komplett demontierbar, durch einen Austausch der Stützelemente anpassbar und recyclebar. Das Formwerkzeug kann dabei mit Ausnahme der eingeformten Formschicht komplett auf Basis nachwachsender Rohstoffe hergestellt werden.

Mit dem modularen Formwerkzeug basierend auf platten- bzw. blattförmigen zweidimensionalen Stützelementen aus Pappe, Karton oder Papier können insbesondere Kleinserien und Prototypen kostengünstig und nachhaltig hergestellt werden.

Die gestapelten Stützelemente ermöglichen den Austausch einzelner Stützelemente und somit die Abformung von verschiedenen Formen im selben Formwerkzeug. Anders als bei der herkömmlichen Verwendung nicht anpassbarer Formwerkzeuge, bei denen bei Änderungsbedarf erhebliche Nachbearbeitungen am Formwerkzeug notwendig sind, lassen sich Modifikationen einfach, schnell und kostengünstig durch Austausch oder Nachbearbeitung einzelner Stützelemente realisieren.

Unter Pappe ist ein Werkstoff zu verstehen, der aus Holzstoff, Zellstoff, Halbzellstoff oder Altpapier durch Zusammenkleben oder Zusammenpressen gefertigt wird. Dabei kann es sich um eine Platte mit einer Dicke von mindestens 1,5 mm handeln. Geeignet ist Vollpappe als massive Platte (einlagig, mehrlagig (gegautscht) oder mehrschichtig (geklebt) mit geschlossener Stirnseitenkante oder Wellpappe als mehrlagige Platte mit zwischenliegender gewellter Schicht, deren Stirnseitenkanten Öffnungen hat.

Karton und Papier unterscheidet sich von Pappe durch eine geringere Dicke und flächenbezogene Masse.
Papier: 7 g/m² bis 250 g/m²
Karton: 150 g/m² bis 600 g/m²
Pappe: ab 500 g/m².

Je nach flächenbezogener Masse wird gemäß DIN 6730 Karton entweder Papier oder Pappe zugeschlagen. Dabei ist Papier mit einer flächenbezogenen Masse zwischen 7 g/m² bis 225 g/m² und Pappe ab 225 g/m² definiert.

Der Rahmen kann aus übereinander geschichteten Lagen von Rahmenelementen aus Sperrholz, Pappe, Karton oder Papier gebildet sein. Damit wird auch der Rahmen aus geschichteten Platten bzw. Blättern aus Sperrholz, Pappe, Karton oder Papier gebildet, die eine Öffnung haben, welche durch einen Randsteg des Rahmens umrandet ist.

Eins solche Rahmenstruktur, die auf Basis von horizontal gestapelten Rahmenelementen aus Pappe, Karton oder Papier (z. B. Wellpappe, Sandwich) gebildet ist, ermöglicht einen leichten, kostengünstigen, nachhaltigen und einfach modifizierbaren Aufbau. Durch die Stapelung der Einzelschichten von Rahmenelementen können bei Bedarf einzelne Elemente ausgetauscht, oder verändert werden, um schnell, kostengünstig und nachhaltig Formwerkzeuge zu modifizieren und so eine höhere Fertigungstoleranz zu gewährleisten. Dies ist bei monolithischen Rahmenstrukturen, die auf eine Sollgeometrie gebracht werden, insb. durch aufwändiges Fräsen aus Halbzeugen, so nicht möglich.

Damit kann das Formwerkzeug auch in ihre Einzelkomponenten zerlegt werden. Herkömmlicherweise kann sie formgebende Struktur lediglich von der Stütz- /Transportstruktur gelöst werden, wobei der Rahmen als werksseitig vorgegebener unzerlegbarer Block erhalten bleibt.

Der Rahmen kann luftdurchlässig sein, bevorzugt ist er aber luftdicht, d. h. luftundurchlässig. Dies kann durch Verkleben von aufeinander geschichteten Rahmenelementen realisiert werden, sofern die Rahmenelemente aus luftdichtem Material sind bzw. aufgrund ihrer Breite und Stärke einen wesentlichen Luftdurchlass beim Bilden eines Vakuums für die Abformung der Faserverbundwerkstoffkomponente ausschließen.

Um den Rahmen herum kann eine angeordnete luftdichte Hülle angeordnet sein. Damit kann, z. B. bei der Nutzung von luftdurchlässiger Wellpappe als Rahmenelemente, ein luftdichtes Verschließen der die Aufnahmeöffnung für die Stützelemente bildenden Innenwände und/oder der Außenwände des Rahmens erfolgen. Damit kann eine Absaugung der formgebenden Struktur über einen Durchlass, d. h. eine Luftabsaugöffnung, auf der Unterseite des Rahmens bzw. Formeinsatzes erfolgen, indem ein Unterdruck in der formgebenden Struktur erzeugt wird.

Auf den Formeinsatz kann eine vakuumdichte Formschicht aufgelegt sein. Eine solche Formschicht deckt nicht nur die formgebende Kontur der Stützelemente ab, um diese vor Umwelteinflüssen, insb. Feuchtigkeit, bei der Abformung zu schützen. Vielmehr gelingt mit der Vakuumdichtigkeit der Formschicht, dass sich die Formschicht in eine formgebende negative Kontur (Mulde) hineinzieht, wenn in den luftdicht angeschlossenen Rahmen ein Unterdruck aufgebracht wird.

Die abformbare Formoberfläche kann damit im Formwerkzeug selbst erzeugt werden. Eine Luftdurchlässigkeit der Stützelemente ermöglicht den Aufbau eines Unterdrucks auf der Oberfläche des Formeinsatzes durch die luftdurchlässigen Stützelemente des Formeinsatzes hindurch.

Damit kann eine Werkzeugkontur mit hoher Toleranz erzeugt werden, indem die Formschicht mit einem Unterdruck präzise ganzflächig auf die konturierte Oberfläche des Formeinsatzes gezogen wird. Ein etwaiger Tiefziehprozess durch ein z. B. zweites Werkzeug entfällt. Damit müssen die Formoberflächen nicht in einem zusätzlichen Prozessschritt mit gesondertem Werkzeug gefertigt werden.

Die auf den Formeinsatz aufgelegter und an die konturierte Oberfläche des Formeinsatzes angeschmiegte Formschicht kann individuell für jede neue Oberflächengeometrie angepasst werden, insb. hinsichtlich der Materialstärke und Materialauswahl.

Die Formschicht kann vorzugsweise eine Formfolie, ein faserverstärkter Kunststoffverbund oder eine aufgespachtelte Deckschicht sein.

Auf der Bodenplatte kann ein Führungselement vorhanden sein. Die Stützelemente können eine Führungskontur haben, wobei das Führungselement und die Führungskontur komplementär zur formschlüssigen Lagerung der Stützelemente an dem Führungselement auf der Bodenplatte ausgebildet sind. Die Stützelemente können dann auf dem mindestens einen sich in Anreihrichtung erstreckenden Führungselementen nebeneinander aufgesteckt bzw. eingesteckt werden und dabei aneinandergeschoben werden.

Vorteilhaft ist zur Bildung eines Halterahmens mindestens ein Seitenhalteelement vorgesehen, das auf dem mindestens einen Führungselemente verschiebbar gelagert und an das jeweils äußere Stützelement anschmiegbar ist. Es können beidseits zwei Seitenhalteelemente vorhanden sein, von denen mindestens eines verschiebbar ist.

Der Formeinsatz und/oder die Formschicht können mindestens ein Funktionselement aufweisen. Das Funktionselement kann dabei aus der Gruppe von Heizelement, Sensor oder Aktor ausgewählt sein. Damit können wahlweise Zusatzfunktionen in das Formwerkzeug integriert werden. Mit Hilfe von Sensoren (z. B. Temperatur, Druck) lassen sich dann Fertigungsparameter bei der Herstellung des Faserverbundwerkstoffkomponente messen und der Fertigungsprozess anhand der gemessenen Sensordaten bedarfsgerecht nachregeln. Mit Hilfe von Aktoren lassen sich während des Fertigungsprozesses bedarfsweise Einwirkungen auf die Faserverbundwerkstoffkomponente aufprägen, um z. B. unerwünscht auftretenden Verformungen entgegenzuwirken oder geplant nach erst einer Vorhärtung Zusatzkonturen einzubringen. Auch Heizelemente sind im weitesten Sinne Aktoren, die durch geregelte Heiz- oder Kühlwirkung einen geregelten Einfluss auf lokale Fertigungstemperaturen ausüben können. Damit lässt sich beispielsweise eine gleichmäßigere Temperaturverteilung während des Fertigungsprozesses erreichen, der durch mit Sensoren lokal gemessene Temperatursensordaten geregelt wird.

Die formgebende Kontur kann aus jeweils einer Stirnkante der aneinander geschichteten Stützelemente gebildet ist.

Der Rahmen kann eine Bodenplatte haben. Damit sind der Rahmen und der darin eingebrachte Formeinsatz luftdicht abgeschlossen. Zudem wird mit der Bodenplatte eine Auflagerebene für die in die Aufnahmeöffnung des Rahmens eingesteckten Stützelemente bereitgestellt.

In der Bodenplatte kann eine Luftabsaugöffnung vorhanden sein. Damit kann ein Unterdruck auf die Oberfläche des Formeinsatzes aufgebracht werden, der durch die Bodenplatte nach unten und durch den Rahmen seitlich ansonsten luftdicht abgeschlossen ist.

Die Stützelemente können hochkant in die vom Rahmen umrandete Öffnung eingesteckt und flächig nebeneinander in der Öffnung angeordnet sein.

Das Verfahren zur Herstellung von Faserverbundwerkstoffkomponenten mit einem solchen Formwerkzeug hat die Schritte:
a) Einstecken von plattenförmigen Stützelementen in den Rahmen zur Bildung eines Formeinsatzes mit einer formgebenden Kontur,
b) Abdecken des Formeinsatzes mit einer Formschicht,
c) Auflegen eines Fasergeleges auf die Formschicht und
d) Abformen der mit dem Fasergelege gebildeten Faserverbundwerkstoffkomponente mit der formgebenden Kontur des Formeinsatzes.

Das Abformen erfolgt in bekannter Weise durch Tränken des auf die Formschicht aufgelegten Faserverbundwerkstoffs mit Matrixmaterial (insb. Harz und Härter) und Aushärten des Faserverbundes, das aus dem Fasergelege und dem Matrixmaterial besteht. Hierbei kann ein Vakuum genutzt werden, um überschüssiges Matrixmaterial aus dem Fasergelege herauszuziehen.

Der Formeinsatz kann durch aneinander Stapeln der aus einem faserhaltigen Naturwerkstoff, bevorzugt aus Sperrholz, Pappe, Karton oder Papier gebildeten Stützelemente hergestellt werden.

Vorteilhaft ist es, wenn nicht nur der Formeinsatz aus einem faserhaltigen Naturwerkstoff, bevorzugt Sperrholz, Pappe, Karton oder Papier, gebildet ist, sondern auch der Rahmen. Dabei kann der Rahmen durch Übereinanderstapeln von Lagen von Rahmenelementen aus einem faserhaltigen Naturwerkstoff, bevorzugt aus Sperrholz, Pappe, Karton oder Papier gebildet werden. Pappe bietet bereits durch ihren inneren Strukturaufbau, insb. bei Verwendung von Wellpappe, eine größere Dicke, so dass die Anzahl der Lagen im vertretbaren Ausmaß gehalten werden kann. Die Dicke kann aber auch durch geeignete Faltung bzw. Wellung der platten- bzw. blattförmigen Einzelelemente erhöht werden. Damit kann der Rahmen auch mit wirtschaftlich vertretbarem Materialeinsatz aus dünnerem Karton- oder Papiermaterial gebildet werden.

Ganz allgemein sind im Zusammenhang mit dieser Anmeldung die Wörter "ein/eine", soweit nicht ausdrücklich anders definiert, nicht als Zahlwort zu verstehen, sondern als unbestimmte Artikel mit dem Wortsinn von "mindestens ein/eine".

Die Erfindung wird nachfolgend beispielhaft anhand eines Ausführungsbeispiels näher beschrieben. Es zeigen:
- Fig. 1: - perspektivische Skizze einer Bodenplatte mit Führungselementen;
- Fig. 2: - perspektivische Skizze der Bodenplatte aus Figur 1 mit Seitenhalteelementen zur Bildung eines Halterahmens;
- Fig. 3: - perspektivische Skizze des Halterahmens aus Figur 2 mit teilweise eingesteckten Stützelementen zur Bildung des Formeinsatzes;
- Fig. 4: - perspektivische Ansicht des Halterahmens mit durch die Stützelemente gebildeten Formeinsatz in dem Halterahmen;
- Fig. 5: - perspektivische Ansicht des Formeinsatzes aus Figur 4 mit aufgebrachter Formschicht;
- Fig. 6: - perspektivische Skizze eines aus gestapelten Rahmenelementen gebildeten Rahmens, der auf die Bodenplatte mit dem Halterahmen und dem Formeinsatz aufgesetzt ist;
- Fig. 7: - perspektivische Ansicht eines aus einem Rahmen mit gestapelten Rahmenelementen und in den Rahmen eingesteckten Stützelementen gebildeten Formwerkzeugs;
- Fig. 8: - perspektivische Ansicht des Formwerkzeugs aus Figur 7 mit Formschicht zum Auflegen auf die Oberseite des Formeinsatzes;
- Fig. 9: - perspektivische Ansicht des Formwerkzeuges mit luftdichter Hülle um den Rahmen und vakuumdichter Formschicht auf dem die formgebende Struktur aufweisenden Formeinsatz.

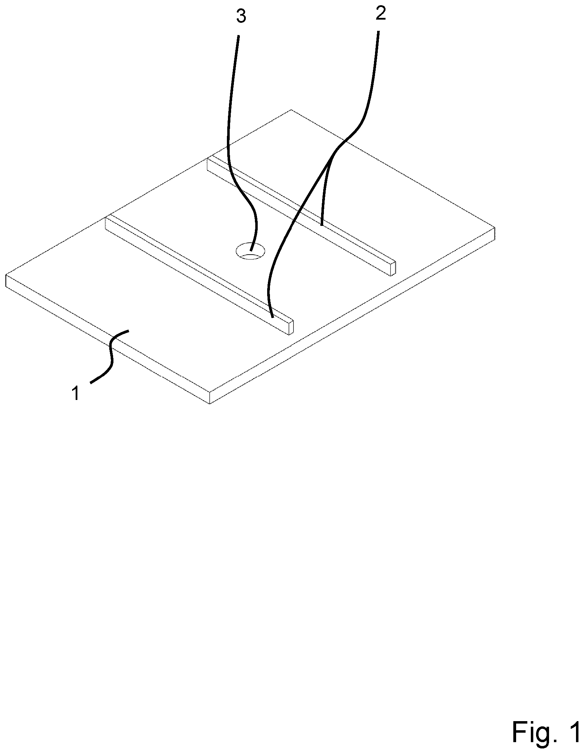

Figur 1 zeigt eine perspektivische Skizze einer Bodenplatte 1 mit Führungselementen 2. Die Führungselemente 2 sind beispielsweise aus Stegen gebildet, die sich parallel zueinander erstrecken. Denkbar sind auch Nuten. Die Führungselemente 2 dienen zum formschlüssigen Halten und Führen von Stützelementen und/oder zum formschlüssigen Halten und Führen von Seitenhalteelementen durch Zusammenwirkung mit komplementären Führungskonturen an den Stützelementen bzw. Seitenhalteelementen.

Die Bodenplatte 1 kann einen integrierten Durchlass 3 für die Luft-Absaugung aufweisen. Der Durchlass kann beispielsweise zwischen einem Paar von Führungselementen 2 angeordnet sein. Der Durchlass 3 kann im Zentrum der Bodenplatte 1 positioniert sein.

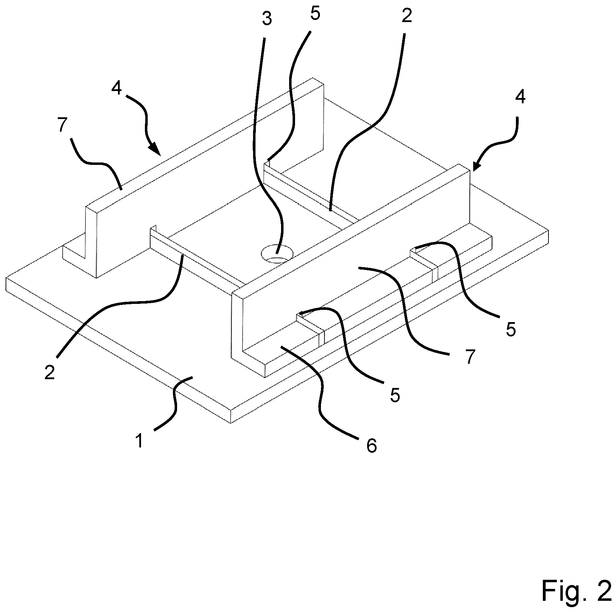

Figur 2 zeigt eine perspektivische Skizze der Bodenplatte 1 aus Figur 1 mit Seitenhalteelementen 4 zur Bildung eines Halterahmens. Die Seitenhalteelemente 4 haben Nuten zur Bildung von Führungskonturen 5, die komplementär zu den Führungselementen 2 sind. Jeweils eine Führungskontur 5 und ein Führungselement 2 greifen formschlüssig ineinander, um das jeweilige Seitenhalteelement 4 verschiebbar an dem mindestens einen Führungselement zu lagern. Es ist mindestens ein Führungselement 2 an der Bodenplatte 1 und eine komplementäre Führungskontur 5 an dem Seitenhalteelement 4 vorhanden. Bevorzugt sind wie dargestellt, zwei Führungselemente 2 parallel und im Abstand voneinander angeordnet, um eine Führung nur in einer Richtung, nämlich der Längserstreckungsrichtung der Führungselemente 2 zu erlauben und ein Verkippen zu verhindern.

Die Seitenhalteelemente 4 sind L-förmig mit einem Basisabschnitt 6, der auf der Bodenplatte 1 aufliegt und Führungskonturen 5 aufweist, die mit den Führungselementen 2 zusammenwirken. Von dem Basisabschnitt 6 ragt ein Seitenabschnitt 7 ab, der lotrecht zur Ebene der Bodenplatte 1 steht. Die Führungskontur 5 kann, wie dargestellt, in den Seitenabschnitt 7 übergehen.

In dem dargestellten Ausführungsbeispiel sind zwei Seitenhalteelemente 4 verschiebbar auf den Führungselementen 2 gelagert. Die Basisabschnitte 6 sind voneinander wegweisend und die Innenflächen der Seitenwandabschnitte 7 aufeinander zuweisend angeordnet.

Denkbar ist auch eine Variante, bei der eine Seitenwand fest mit der Bodenplatte 1 verbunden ist und nur ein Seitenhalteelement 4 verschiebbar an der Bodenplatte gelagert ist.

Durch die verschiebbare Lagerung des mindestens einen Seitenhalteelementes 4 kann die Breite eines Formeinsatzes variabel eingestellt werden.

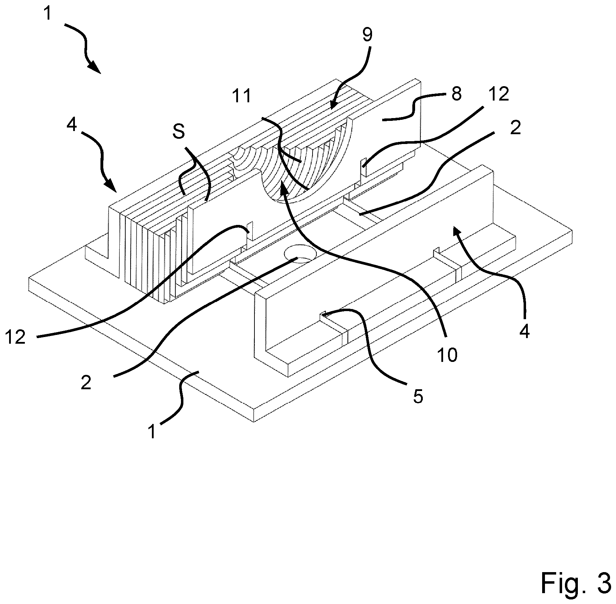

Figur 3 zeigt eine perspektivische Skizze des Halterahmens aus Figur 2 mit teilweise eingesteckten Stützelementen 8 zur Bildung eines Formeinsatzes 9.

Nach der Bildung des Halterahmens werden einzelne Stützelemente 8 zwischen die Seitenhalteelemente 4, d. h. in die Halterahmenstruktur, eingesteckt und bilden eine formgebende Kontur 10 über die jeweiligen Kantenflächen. Die der Bodenplatte 1 diametral gegenüberliegenden Stirnseitenkanten S der Stützelemente 8 sind mit einem Konturprofil 11 versehen (d. h. profiliert), um die gewünschte positive und/oder negative formgebende Kontur 10 zu bilden.

Die Stufenhöhen zwischen den Stützelementen 8 ist abhängig von der Geometrie sowie den verwendeten Materialstärken der Stützelemente 8. Für exakte Abformungen kann die Materialstärke der verwendeten Stützelemente 8 auf weniger als 1 mm reduziert werden.

Die nebeneinander gestapelten Stützelemente 8 bilden zusammen den Formeinsatz 9, der an der durch die Stirnseitenkanten S gebildeten Oberfläche die aus der Ebene der Oberfläche herausstehende positive und/oder in die Ebene der Oberfläche hineinragende (muldenförmige) negative formgebende Kontur 10 aufweist.

Erkennbar ist, dass die Stützelemente 8 an ihrem der Bodenplatte 1 zugewandten unteren Randbereich eine Führungskontur 12 haben, die mit den Führungselementen 2 zusammenwirken. So können die Führungskonturen 12 als Nuten bzw. Buchten ausgebildet sein, in welche jeweils ein stegförmiges Führungselement 2 eintaucht.

Um die Stützelemente 8 während des Einsteckens zu führen und vor Umfallen zu sichern können die Seitenhalteelemente 4 relativ zueinander bewegt werden, so dass diese beidseits in Kontakt mit den jeweils äußeren Stützelementen 8 treten und diese halten. Mit größerer Anzahl der eingesteckten Stützelemente 8 vergrößert sich die Breite des Formeinsatzes 9, so dass die Seitenhalteelemente 4 entsprechend voneinander weg verschoben werden.

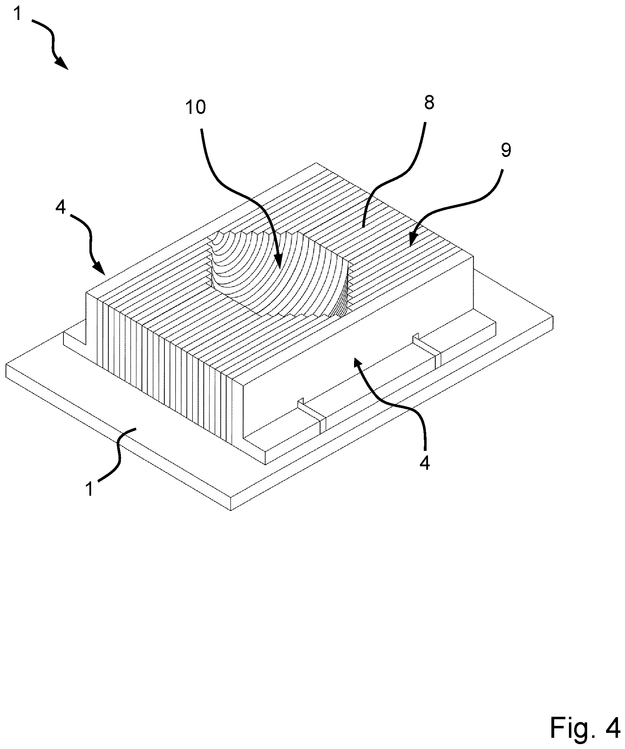

Figur 4 zeigt eine perspektivische Ansicht des Halterahmens mit durch die Stützelemente 8 gebildeten Formeinsatz 9 in dem Halterahmen.

Durch die flächig aneinander gestapelten Stützelemente 8 wird ein Formeinsatz 9 gebildet, der auf der Oberseite die gewünschte formgebende Kontur 10 aufweist, die Stützelemente 8 werden durch die Seitenhalteelemente 4 gehalten und von der Bodenplatte 1 getragen.

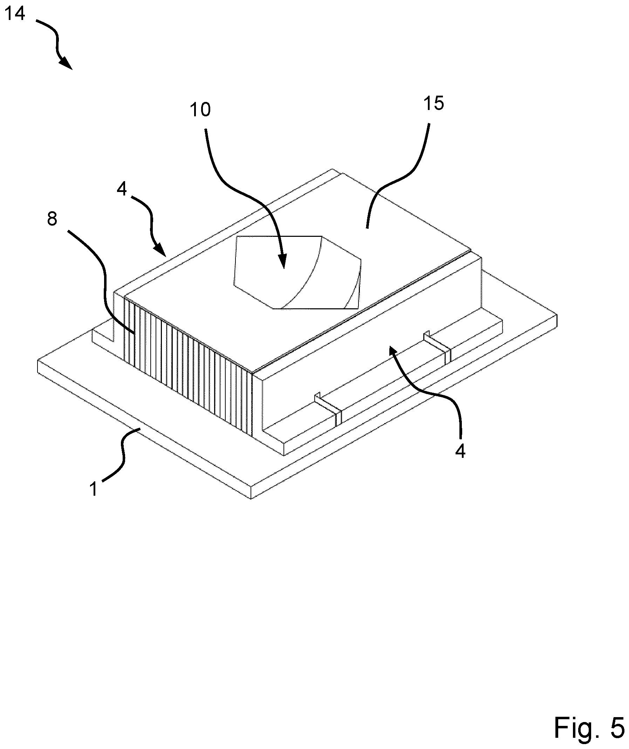

Figur 5 zeigt eine perspektivische Ansicht des Formwerkzeugs 14 aus Figur 4 mit einer Formschicht 15, die auf Formeinsatz 9 aufgelegt wird.

Die Formschicht 15 sollte und gegen die beim Abformen auftretenden Umwelteinflüssen widerstandsfähig sein. Es ist insbesondere vorteilhaft, wenn die Formschicht 15 feuchtigkeitsundurchlässig ist, um ein Durchtritt des Matrixmaterials in die feuchtigkeitsempfindlichen Stützelemente 8 zu verhindern.

Die Formschicht 15 kann aus einer Spachtelmasse gebildet werden, die manuell auf die Oberfläche der Stützelemente 8, d. h. auf den Formeinsatz 9 aufgespachtelt wird.

Denkbar ist aber auch die Bildung der Formschicht aus einem verformbaren Blatt, das auf die Oberfläche aufgelegt und manuell, automatisch mit einer Handhabungseinrichtung (z. B. Roboter, oder mittels Überdruck auf die Oberseite der Formschicht 15 an die Kontur 10 angepasst wird.

Die Formschicht 15 kann aber auch optional mittels Unterdruck an die formgebende Kontur 10 angepasst werden. Hierzu sind die Stützelemente 8 luftdurchlässig. Die Formschicht 15 besteht dabei aus einem vakuumdichten, d. h. luftundurchlässigen Material. Durch den Durchlass 3 in der Bodenplatte 1 kann dann Luft abgesaugt werden, um einen Unterdruck (d. h. ein Vakuum) an der Unterseite der Formschicht 15 (d. h. der Auflageseite) zu erzeugen. Hierzu müssten die vorderen und hinteren Stirnseiten der Stützelemente 8 ggf. noch abgedichtet werden, bspw. mit einer den Formeinsatz seitlich umgebenden Hülle und/oder mit Frontrahmenelementen, die sich jeweils an einer Seite zwischen den Stirnkanten eines Paares von Seitenhalteelemente 4 erstrecken. Denkbar ist auch die Umhausung des Halterahmens mit einem Rahmenelement.

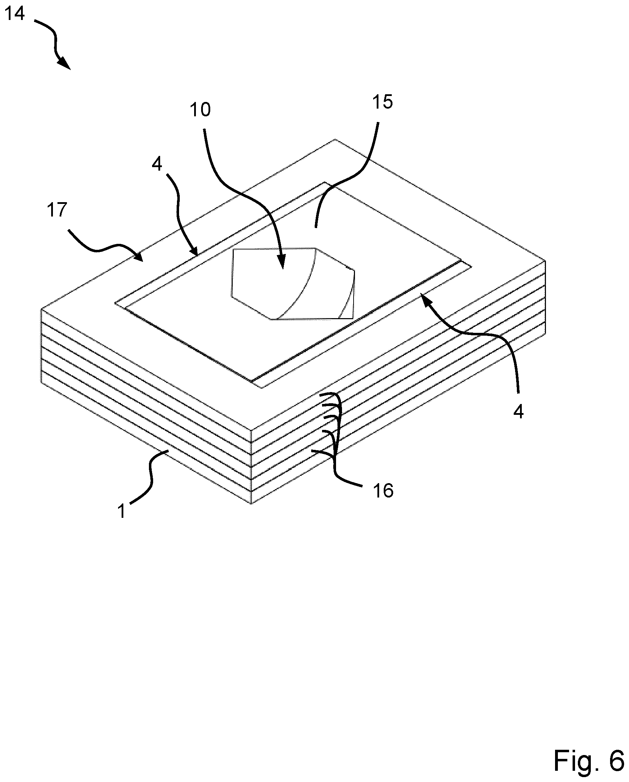

Figur 6 zeigt eine perspektivische Skizze eines aus gestapelten Rahmenelementen 16 gebildeten Rahmens 17, der auf die Bodenplatte 1 mit dem aus den Seitenhalteelementen 4 gebildeten Halterahmen und den Formeinsatz 9 aufgesetzt ist. Die Formschicht 15 ist dabei schon, ausgehend von der Herstellungsstufe aus Figur 5 aufgebracht. Die Formschicht kann dabei aufgespachtelt oder als Folie manuell oder mit einem Handhabungsautomat aufgedrückt und ggf. bspw. mit einer rückseitigen Klebeschicht aufgeklebt sein. Unter einem Aufspachteln kann im weitesten Sinne auch das Auftragen eines Faserverbundgeleges und Matrixmaterial verstanden werden. Eine solche ausgehärtete Faserverbundschicht sollte nach dem Aushärten geglättet werden, bspw. mit einer Spachtelmasse oder nur durch Schleifen.

Mit Hilfe dieser Rahmenelemente 16, die bedarfsweise mit ihrer Aufnahmeöffnung die gewünschte Breite des Formeinsatzes 9 zuzüglich der Dicke der Seitenabschnitte 7 der Seitenhalteelemente 4 aufweisen, können die verschieblichen Seitenhalteelemente 4 formschlüssig in ihrer Endlage gehalten und die Stützelemente 8 damit fixiert werden.

Optional ist auch eine Ausführungsform denkbar, bei der kein Halterahmen vorhanden ist. Die Stützelemente 8 werden dann direkt in die Aufnahmeöffnung des Rahmens 17 eingesteckt, ohne dass sie dabei von Seitenhalteelementen 4 gehalten werden. Auch die Führungselemente 2 und Führungskonturen 5 sind dann nicht unbedingt erforderlich.

Das Formwerkzeug 14 hat einen Rahmen 17 als Trägerelement. Der Rahmen 17 kann einstückig sein, z. B. aus Metall (Stahl, Alu und dergl.), aus Kunststoff und dergleichen. Ein solcher monolithischer Rahmen 17 ist aber aufwändig in der der Herstellung, schwer und erfordert relativ großen Lagerplatz. Für Standardgrößen von Formwerkzeugen ist ein solcher monolithischer Rahmen dennoch im Rahmen 17 der vorliegenden Erfindung geeignet.

Auf die Bodenplatte 1 (Grundplatte) mit einem optionalen integrierten Durchlass 3 für die Luft-Absaugung werden die einzelnen Rahmenelemente 16 aus faserhaltigem Naturwerkstoff, z. B. Sperrholz, Pappe (ggf. aber auch Karton oder Papier) horizontal, d. h. parallel zur Ebene der Bodenplatte 1, übereinandergestapelt.

Die Rahmenelemente 16 haben eine Aufnahmeöffnung, die durch Randstege umgeben ist, um den Rahmen 17 zu bilden. Durch das flächige Aneinanderlegen, d. h. Stapeln der Rahmenelemente 16 übereinander entsteht ein Kubus mit einer quaderförmigen Aufnahmeöffnung, wobei der Boden des Rahmens 17 und damit der Aufnahmeöffnung durch die Bodenplatte 1 abgedeckt und (ggf. bis auf die optionale Luftabsaugöffnung 3) geschlossen ist.

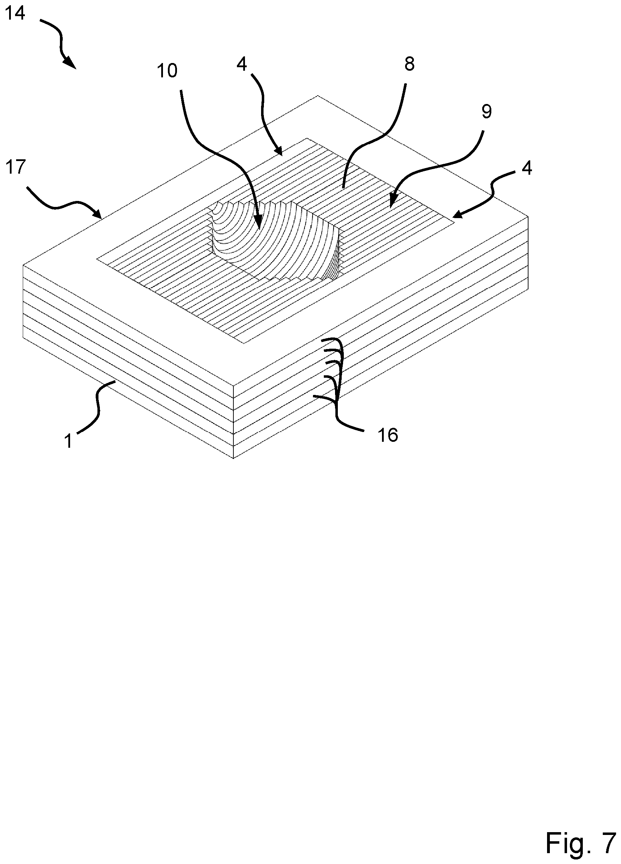

Figur 7 zeigt eine perspektivische Ansicht eines aus einem Rahmen 17 mit gestapelten Rahmenelementen 16 und in den Rahmen 17 eingesteckten Stützelementen 8 gebildeten Formwerkzeugs 14. Zusätzlich ist der optionale, aus den verschiebbar gelagerten Seitenhalteelementen 4 gebildete Halterahmen vorhanden. Die Oberseite des Formeinsatzes 9 ist noch nicht durch eine Formschicht 15 abgedeckt.

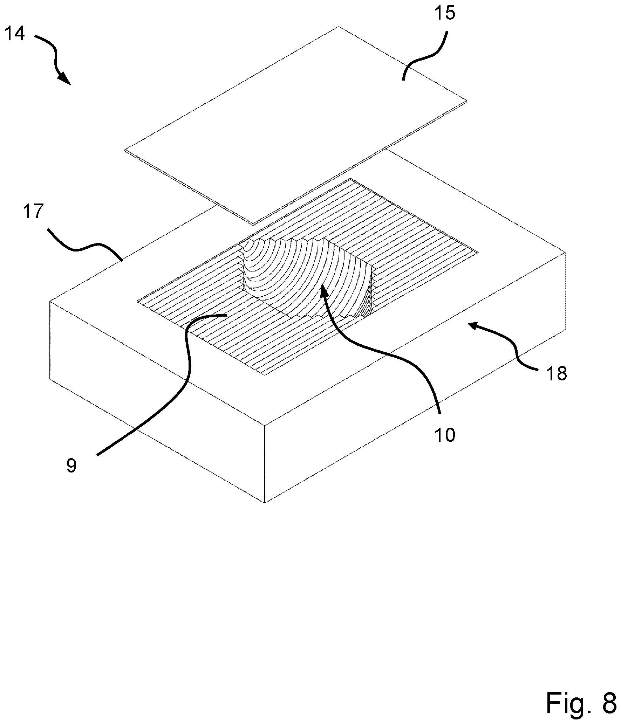

Figur 8 zeigt eine perspektivische Ansicht des Formwerkzeugs 14 aus Figur 7 mit einer noch nicht aufgelegten Formschicht 15, die auf die Oberseite des Formeinsatzes 9 aufgelegt wird.

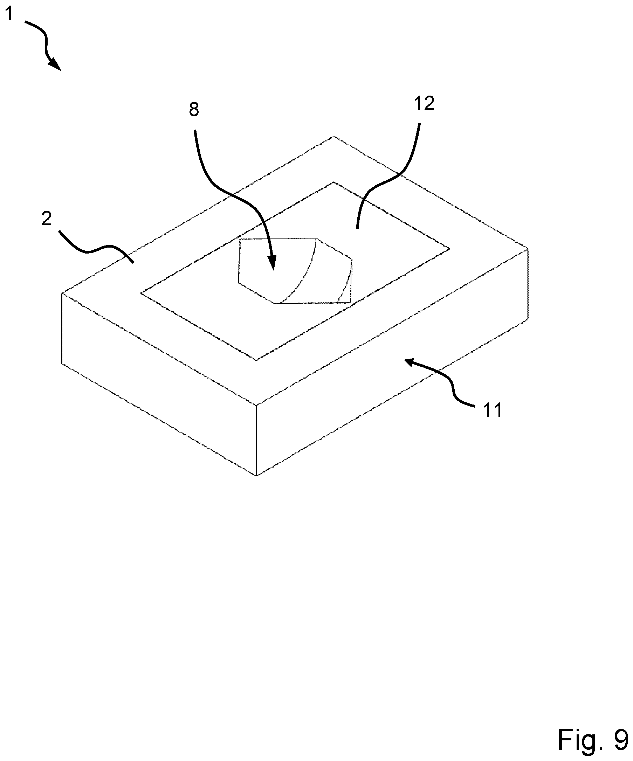

Figur 9 zeigt eine perspektivische Ansicht des Formwerkzeuges 14 mit einer luftdichten Hülle 18 um den Rahmen 17 und vakuumdichter Formschicht 15 auf dem die formgebende Kontur 10 (Struktur) aufweisenden Formeinsatz 9.

Für das Aufbringen der Formschicht 15 mit Unterdruck ist eine Absaugung von Luft über die Unterseite und damit eine Luftundurchlässigkeit des Formwerkzeuges 14 erforderlich. Hierzu kann der Rahmen 17 mit einer luftundurchlässigen Hülle 17 versehen werden, die bspw. die Außenwände des Rahmens 17 umschließt. Damit erfolgt eine Versieglung der Oberfläche der Rahmenstruktur.

Nach dem Auflegen der Formschicht 15 kann über die Luftabsaugöffnung bzw. Durchlass 3 in der Bodenplatte 1 ein Luftunterdruck gegenüber dem atmosphärischen Druck, d. h. ein Vakuum, auf den Formeinsatz 9 aufgebracht werden, durch den die auf der Oberseite des Formeinsatzes 9 aufliegende Formfolie 15 auf die Oberfläche des Formeinsatzes 9 gezogen wird und sich damit an die formgebende Kontur 10 anpasst. Damit liegt die Formfolie 15 über die gesamte Oberfläche des Formeinsatzes 9 bündig auf der Oberfläche auf.

Das Einbringen einer individuell angepassten Formschicht 15 erfolgt in dem Ausführungsbeispiel somit über die Absaugung der formgebenden Kontur 10 (Struktur) und des damit erzeugten Unterdrucks.

Denkbar sind aber auch andere Lösungen, bei dem die Formschicht 15 manuell oder mit einem Manipulator an die formgebende Kontur 10 angepasst wird. Es kann auch ein Luftüberdruck auf die Formschicht 15 von der Außenseite, d. h. der sichtbaren Oberseite, die der Bodenplatte 1 diametral gegenüberliegt, aufgebracht werden, um die Formschicht 15 auf die konturierte Oberfläche des Formeinsatzes 9 anzupressen.

Für die Einbringung der Formschicht 15 und die Art der Formschicht 15 gibt es zudem weitere Ausführungsmöglichkeiten:

### Variante 1:

Verwendung von Formfolien z. B. PTFE Folien mit einer Silikon-Klebschicht. Solche Formfolien besitzen sehr hohe Bruchdehnungen und können an komplexe Konturen angepasst werden. Zudem bildet eine PTFE Folie eine vakuumdichte Oberfläche mit trennenden Eigenschaften. Die Formfolie wird luftdicht mit der Rahmenstruktur, d. h. dem Rahmen 17, verbunden und durch den aufgebauten Unterdruck an die formgebende Struktur 10 angepresst. Durch die Aktivierung der Klebschicht bei erhöhten Temperaturen erfolgt die feste Anbindung der Formschicht 15 an den Formeinsatz 9.

### Variante 2:

Verwendung von faserverstärkten Kunstoffen als Formschicht 15. Die Aushärtung und Formgebung der Formschicht 15 erfolgt im Formwerkzeug 14. Diese Variante ist besonders geeignet zur Verwendung bei den klassischen Faserverbund-Herstellungsverfahren: Handlaminier-, Vakuuminfusionsverfahren oder Prepregverfahren. Der benötigte Unterdruck für die Herstellungsverfahren wird durch einen Vakuumaufbau erzeugt. Die Abdichtung der Vakuumfolie erfolgt auf der Oberseite des Rahmens 17, d. h. der Rahmenstruktur. Die Absaugung erfolgt auf der Unterseite. Das Eindringen des Harzes in die Pappstrukturen wird durch eine luftdurchlässige aber harzundurchlässige Schicht/Folie verhindert. Die Aushärtung und Formgebung der Formschichten 15 erfolgt in definierten Temperaturverläufen.

### Erweiterung der Variante 2:

Durch eine Funktionsintegration lassen sich Funktionselemente in die Formschicht 15 integrieren. Dabei ist eine Integration von Sensorelementen, Heizelementen, Aktoren und dergleichen in die noch unausgehärtete Kunststoffschicht möglich. Dies ermöglicht die Herstellung individuell angepasster Funktionsschichten.

### Bezugszeichenliste

- 1: Bodenplatte
- 2: Führungselement
- 3: Durchlass
- 4: Seitenhalteelement
- 5: Führungskontur
- 6: Basisabschnitt
- 7: Seitenabschnitt
- 8: Stützelement
- 9: Formeinsatz
- 10: formgebende Kontur
- 11: Konturprofil
- 12: Führungskontur
- 14: Formwerkzeug
- 15: Formschicht
- 16: Rahmenelement
- 17: Rahmen
- 18: luftdichte Hülle

- S: Stirnseitenkante

## Patentansprüche

1. Formwerkzeug (14) zur Herstellung von Faserverbundwerkstoffkomponenten mit einem Rahmen (17) und/oder einem aus mindestens einem Seitenhalteelement (4) gebildeten Halterahmen und mit einem Formeinsatz (9), der eine formgebende Kontur (10) aufweist, **dadurch gekennzeichnet, dass** der Formeinsatz (9) aus aneinander geschichteten Lagen von plattenförmigen Stützelementen (8) gebildet ist, wobei der Formeinsatz (9) mit einer Formschicht (15) abdeckbar und der Faserverbundwerkstoff auf der Formschicht (15) auflegbar und die aus dem Faserverbundwerkstoff gebildete Faserverbundwerkstoffkomponente mit der formgebenden Kontur (10) des Formeinsatzes (9) abformbar ist.

2. Formwerkzeug (14) nach Anspruch 1, **dadurch gekennzeichnet, dass** die Stützelemente (8) aus einem faserhaltigen Naturwerkstoff, bevorzugt aus Sperrholz, Pappe, Karton oder Papier, gebildet sind.

3. Formwerkzeug (14) nach Anspruch 1 oder 2, **dadurch gekennzeichnet, dass** der Rahmen (17) aus übereinander geschichteten Lagen von Rahmenelementen (16) aus einem faserhaltigen Naturwerkstoff, bevorzugt aus Sperrholz, Pappe, Karton oder Papier, gebildet ist.

4. Formwerkzeug (14) nach einem der Ansprüche 1 bis 3, **dadurch gekennzeichnet, dass** der Rahmen (17) luftundurchlässig ist.

5. Formwerkzeug (14) nach einem der Ansprüche 1 bis 4, **gekennzeichnet durch** eine um den Rahmen (17) angeordnete luftundurchlässige Hülle (18).

6. Formwerkzeug (14) nach einem der Ansprüche 1 bis 5, **dadurch gekennzeichnet, dass** eine vakuumdichte Formschicht (15) auf dem Formeinsatz (9) aufgelegt ist.

7. Formwerkzeug (14) nach einem der Ansprüche 1 bis 6, **dadurch gekennzeichnet, dass** der Formeinsatz (9) und/oder die Formschicht (15) mindestens ein Funktionselement aufweist.

8. Formwerkzeug (14) nach Anspruch 7, **dadurch gekennzeichnet, dass** das Funktionselement aus der Gruppe von Heizelement, Sensor oder Aktor ausgewählt ist.

9. Formwerkzeug (14) nach einem der vorhergehenden Ansprüche, **dadurch gekennzeichnet, dass** die formgebende Kontur (10) aus jeweils einer Stirnseitenkante (S) der aneinander geschichteten Stützelemente (8) gebildet ist.

10. Formwerkzeug (14) nach einem der vorhergehenden Ansprüche, **dadurch gekennzeichnet, dass** der Rahmen (17) eine Bodenplatte (1) hat.

11. Formwerkzeug (14) nach Anspruch 10, **dadurch gekennzeichnet, dass** in der Bodenplatte (1) eine Luftabsaugöffnung (3) vorhanden ist.

12. Formwerkzeug (14) nach einem der vorhergehenden Ansprüche, **dadurch gekennzeichnet, dass** die Stützelemente (8) hochkant in die von einem Rahmen (17) und/oder von Seitenhalteelementen (4) gebildeten Halterahmen mindestens teilweise umrandete Aufnahmeöffnung eingesteckt und flächig nebeneinander in der Aufnahmeöffnung angeordnet sind.

13. Formwerkzeug (14) nach einem der vorhergehenden Ansprüche, **dadurch gekennzeichnet, dass** auf der Bodenplatte (1) mindestens ein Führungselement (2) angeordnet ist und die Stützelemente (8) eine Führungskontur (12) haben, wobei das Führungselement (2) und die Führungskontur (12) komplementär zur formschlüssigen Lagerung der Stützelemente (8) an dem Führungselement (2) auf der Bodenplatte (1) ausgebildet sind.

14. Formwerkzeug (14) nach Anspruch 13, **gekennzeichnet durch** mindestens ein Seitenhalteelement (4), das auf dem mindestens einen Führungselement (2) verschiebbar gelagert und an den jeweils äußeren Stützelementen (8) anschmiegbar ist.

15. Formwerkzeug (14) nach einem der vorhergehenden Ansprüche, **dadurch gekennzeichnet, dass** die Formschicht (15) eine Formfolie, ein faserverstärkter Kunststoffverbund oder eine aufgespachtelte Deckschicht ist.

16. Verfahren zur Herstellung von Faserverbundwerkstoffkomponenten mit einem Formwerkzeug (14) nach einem der vorhergehenden Ansprüche, **gekennzeichnet durch** Einstecken von plattenförmigen Stützelementen (8) in einen Rahmen (17) oder aus mindestens einem Seitenhalteelement (4) gebildeten Halterahmen zur Bildung eines Formeinsatzes (9) mit einer formgebenden Kontur (10), Abdecken des Formeinsatzes (9) mit einer Formschicht (15), Auflegen eines Faserverbundwerkstoffs auf die Formschicht (15) und Abformen der aus dem Faserverbundwerkstoff gebildeten Faserverbundwerkstoffkomponente mit der formgebenden Kontur (10) des Formeinsatzes (9).

17. Verfahren nach Anspruch 16, **gekennzeichnet durch** Bilden des Formeinsatzes (9) durch aneinander Stapeln der Stützelemente (8), die aus einem faserhaltigen Naturwerkstoff, bevorzugt aus Sperrholz, Pappe, Karton oder Papier, gebildet sind.

18. Verfahren nach Anspruch 16 oder 17, **gekennzeichnet durch** Bilden des Rahmens (17) durch Übereinanderstapeln von Lagen von Rahmenelementen (16) aus einem faserhaltigen Naturwerkstoff, bevorzugt aus Sperrholz, Pappe, Karton oder Papier.

19. Verfahren nach einem der Ansprüche 16 bis 18, **dadurch gekennzeichnet, dass** das Abdecken des Formeinsatzes (9) durch Aufspachteln einer Spachtelmasse auf die durch die Stirnseiten der aneinander angeordneten Stützelemente (8) gebildeten Oberseite erfolgt.
